# EUROPEAN PATENT APPLICATION

(11) **EP 2 645 704 A1**
(43) Date of publication of application: **02.10.2013**
(21) Application number: 12161303.8
(22) Date of filing: 26.03.2012
(51) Int. Cl.: H04N 5/235

(54) **Method and device for focus selection in digital cameras**

(71) Applicant: BlackBerry Limited, Waterloo ON N2L 3W8 (CA)
(72) Inventor: Hsu, Cheng-Sheng, Waterloo, Ontario N2L 3W8 (CA)
(74) Representative: Patel, Binesh

(57) **Abstract**

The present disclosure provides a method and device for focus selection in digital cameras. A method for composing an image on a portable electronic device is described. In one embodiment, the method comprises: focusing light received by an image sensor, the focusing including moving a lens between a number of focus positions; capturing an image using the image sensor at a plurality of the number of the focus positions, the captured images having different focus distances; storing the captured images; determining which of the captured images is an optimally focused image; and displaying the optimally focused image as a currently displayed image on a display of the portable electronic device.

## Description

### TECHNICAL FIELD

The present disclosure relates to digital cameras, and more particularly to a method and device for focus selection in digital cameras.

### BACKGROUND

Digital cameras, including digital cameras built into smartphones and other multipurpose portable electronic devices, are typically provided an autofocus system to automatically focus an image captured by an image sensor of the digital camera. While somewhat effective and useful to novice users, automatic focus solutions provide limited or no user control over the focus of the digital camera. Accordingly, there remains a need for improved image capture methods and devices.

### BRIEF DESCRIPTION OF THE DRAWINGS

Figure 1 is a block diagram illustrating a portable electronic device suitable for carrying out example embodiments of the present disclosure.

Figure 2 is a block diagram illustrating an image capture assembly of the portable electronic device of Figure 1.

Figure 3 is a flowchart of a method for focus selection in a digital camera in accordance with one example embodiment of the present disclosure.

### DETAILED DESCRIPTION

Reference will now be made to the accompanying drawings which show example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practised without some of these details. In other instances, well-known methods, procedures, and components have not been described in detail to avoid obscuring the example embodiments described. The description is not to be considered as limited to the scope of the example embodiments described herein.

Any reference to direction or orientation stated herein is for convenience and is not intended to be limiting unless explicitly stated herein. Any directional references in relation to the graphical user interface (GUI) are relative to the screen orientation of the GUI rather than a fixed point or reference on the host electronic device. The term "user interface" is sometimes used herein to refer to the GUI for convenience. For the purpose of the present disclosure, the terms device orientation and device position are treated equivalently.

The present disclosure provides post-capture focus selection methods and devices.

In accordance with one example embodiment, there is provided a method for composing an image on a portable electronic device, the method comprising: focusing light received by an image sensor, the focusing including moving a lens between a number of focus positions; capturing an image using the image sensor at a plurality of the number of the focus positions, the captured images having different focus distances; storing the captured images; determining which of the captured images is an optimally focused image; and displaying the optimally focused image as a currently displayed image on a display of the portable electronic device.

In accordance with another example embodiment, there is provided a method for composing an image on a portable electronic device, the method comprising: focusing light received by an image sensor, the focusing including moving a lens between an initial focus position having a first focus distance and an adjusted focus position having a second focus distance; capturing an image using the image sensor at each of the initial focus position and an adjusted focus position; displaying one of the images captured at the initial focus position and the adjusted focus position which is determined to be an optimally focused image; and storing the image captured at the initial focus position and the image captured at the adjusted focus position in persistent memory.

In accordance with yet a further example embodiment, there is provided an electronic device, comprising: a processor; a lens coupled to a motor which is controlled by the processor; a display and an image sensor both coupled to the processor; wherein the processor is configured for performing the method(s) set forth herein.

In accordance with yet a further embodiment of the present disclosure, there is provided a computer program product comprising a computer readable medium having stored thereon computer program instructions for implementing a method on an electronic device, the computer executable instructions comprising instructions for performing the method(s) set forth herein.

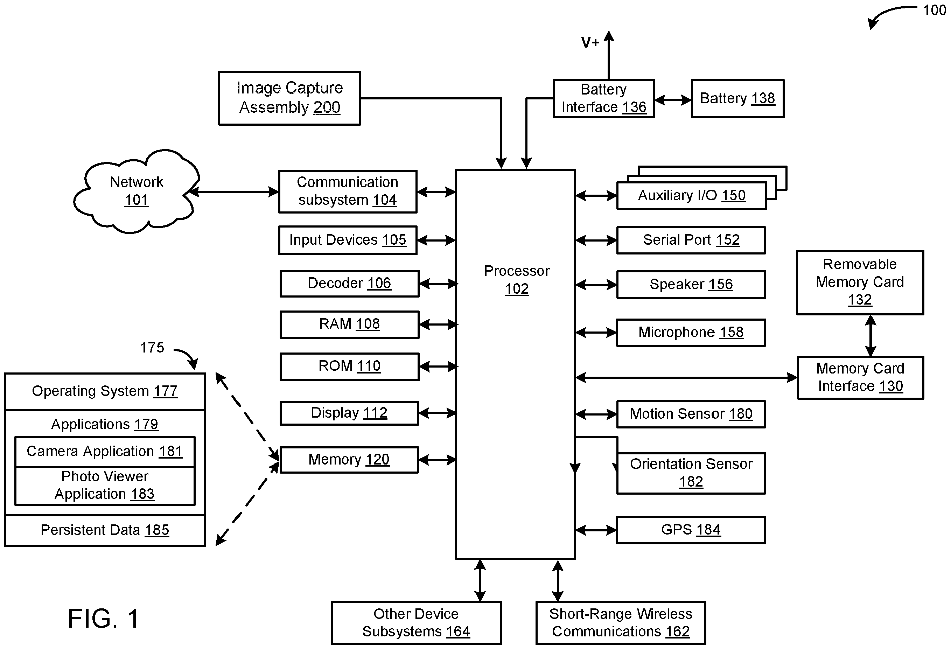

Reference is first made to Figure 1 which illustrates a portable electronic device 100 (referred to hereinafter as merely electronic device 100 for convenience) in which example embodiments described in the present disclosure can be applied. The electronic device 100 described below has wireless communication capabilities; however, it is contemplated that the teachings of the present disclosure may be applied to devices without wireless communication capabilities. Examples of the electronic device 100 include, but are not limited to, a mobile phone, smartphone or superphone, tablet computer, notebook computer (also known as a laptop, netbook or ultrabook computer depending on the device capabilities), wireless organizer, personal digital assistant (PDA), electronic gaming device, and special purpose digital camera (which may be capable of both still image and video image capture).

The electronic device 100 includes a rigid case (not shown) housing the electronic components of the electronic device 100. The electronic components of the electronic device 100 are mounted on a printed circuit board (not shown). The electronic device 100 includes a controller comprising at least one processor 102 (such as a microprocessor) which controls the overall operation of the electronic device 100. Communication functions, including data and voice communications, are performed through a communication subsystem 104. Data received by the electronic device 100 may be decompressed and decrypted by a decoder 106. The communication subsystem 104 receives messages from and sends messages to a wireless network 101. The wireless network 101 may be any suitable type of wireless network.

The processor 102 interacts with other components, such as one or more input devices 105, Random Access Memory (RAM) 108, Read Only Memory (ROM) 110, a display 112 such as a colour liquid crystal display (LCD), persistent (non-volatile) memory 120 which may be flash erasable programmable read only memory (EPROM) memory ("flash memory") or any other suitable form of memory, an image capture assembly 200, a motion sensor 180 which enables to processor 102 to determine whether the electronic device 100 is in motion and the nature of any sensed motion at any appropriate time, e.g., when an image is captured, an orientation sensor 182 which enables the processor 102 to determine which direction the electronic device 100 is pointed at any appropriate time, e.g., when an image is captured, e.g., when an image is captured, global positioning system (GPS) device 184 which enables the processor 102 to determine GPS coordinates (i.e., location) of the electronic device 100 at any appropriate time, e.g., when an image is captured, auxiliary input/output (I/O) subsystems 150, data port 152 such as serial data port (e.g., Universal Serial Bus (USB) data port), speaker 156, microphone 158, short-range communication subsystem 162, and other device subsystems generally designated as 164. The components of the electronic device 100 are coupled via a communications bus (not shown) which provides a communication path between the various components.

The display 112 typically includes a display area in which information may be displayed and a non-display area extending around the periphery of the display area. Information is not displayed in the non-display area. The non-display area may be utilized to accommodate, for example, electronic traces or electrical connections, adhesives or other sealants, and/or protective coatings around the edges of the display area.

The display 112 may be provided as part of a touch-sensitive display which provides an input device 105. The display 112 which together with a touch-sensitive overlay (not shown) operably coupled to an electronic controller (not shown) comprise the touch-sensitive display. The touch-sensitive display is typically a capacitive touch-sensitive display which includes a capacitive touch-sensitive overlay may be any other suitable touch-sensitive display, such as a resistive, infrared, surface acoustic wave (SAW) touch-sensitive display, strain gauge, optical imaging, dispersive signal technology, acoustic pulse recognition, and so forth, as known in the art. The overlay of the touch-sensitive display may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

User-interaction with the GUI is performed through the input devices 105. Information, such as text, characters, symbols, images, icons, and other items are rendered and displayed on the display 112 via the processor 102. The processor 102 may interact with the orientation sensor to detect direction of gravitational forces or gravity-induced reaction forces so as to determine, for example, the orientation of the electronic device 100 in order to determine a screen orientation for the GUI.

The input devices 105 may include a keyboard, control buttons such as a power toggle (on/off) button (not shown), a camera button (not shown) for enabling a camera mode, a capture button (not shown) for enabling an image capture sequence when in the camera mode, one or more zoom buttons (not shown) for enabling a selection of a zoom setting when in the camera mode, and a navigation device (not shown) for navigating through stored data, such as digital images, menu choices and the like which are displayed on the display 112. When the display 112 is provided as part of a touch-sensitive display, the capture button, zoom button and other camera controls may be provided by onscreen user interface elements displayed on the display 112 instead of, or in addition to, physical interface components. The keyboard may be provided instead of, or in addition to, a touch-sensitive display depending on the embodiment. At least some of the control buttons may be multi-purpose buttons rather than special purpose or dedicated buttons.

The electronic device 100 also includes a memory card interface 130 for receiving a removable memory card 132 comprising persistent memory, such as flash memory. A removable memory card 132 can be inserted in or coupled to the memory card interface 130 for storing and reading data by the processor 102 including, but not limited to still images and optionally video images captured the image capture assembly 200. Other types of user data may also be stored on the removable memory card 132. Other types of removable digital image storage media, such as magnetic hard drives, magnetic tape, or optical disks, may be used in addition to, or instead of, the removable memory card 132.

The processor 102 operates under stored program control and executes software modules 175 stored in memory, for example, in the persistent memory 120. As illustrated in Figure 1, the software modules 175 comprise operating system software 177 and software applications 179. The software applications 179 include a camera application 181 and photo viewer application 183. The camera application 181 contains the logic for operating the image capture assembly 200 and capturing still images and optionally video images from the image capture assembly 200 and storing the still images and video images in the persistent memory 120. The photo viewer application 183 contains logic for displaying data (i.e., still images and optionally video images) from the persistent memory 120 and data from the image capture assembly 200 on the display 112. Persistent data 185, such as user data, can also be stored in the persistent memory 120. The persistent data 185 may include digital media files stored in the electronic device 100 such as still images and/or video images captured the image capture assembly 200, or other still images and/or video images transferred, downloaded or otherwise stored on the persistent memory 120.

The software modules 175 or parts thereof may be temporarily loaded into volatile memory such as the RAM 108. The RAM 108 is used for storing runtime data variables and other types of data or information. Although specific functions are described for various types of memory, this is merely one example, and a different assignment of functions to types of memory could also be used.

Still images and optionally video images captured the image capture assembly 200 are stored in persistent memory after. The persistent memory may be one or any combination of the internal persistent memory 120, the removable memory card 132 or remote persistent storage. The remote persistent storage may be a cloud based resource, such as a remote content server, accessible by the wireless network 101 or possibly via a wireline (e.g., via the data port 152) or short-range wireless connection (e.g., via the short-range communication subsystem 162) to a host computer having wireline access to the cloud based resource. The location at which captured still images and optionally video images is stored is typically a configurable setting which may be set by a user either in advance or at the time of capture.

The camera application 181 and/or photo viewer application 183 can access the remote persistent storage and optionally cloud based applications through the wireless network 101 or possibly via a wireline or short-range wireless connection to a host computer having wireline access to the cloud based resource. The use of cloud based or other remote persistent storage allows access to still images and optionally video images captured the image capture assembly 200 from nearly any computer or portable electronic device having access to the Internet.

The electronic device 100 also includes a battery 138 as a power source, which is typically one or more rechargeable batteries that may be charged, for example, through charging circuitry coupled to a battery interface such as the serial data port 152. The battery 138 provides electrical power to at least some of the electrical circuitry in the electronic device 100, and the battery interface 136 provides a mechanical and electrical connection for the battery 138. The battery interface 136 is coupled to a regulator (not shown) which provides power V+ to the circuitry of the electronic device 100.

A received signal, such as a text message, an e-mail message, or web page download, is processed by the communication subsystem 104 and input to the processor 102. The processor 102 processes the received signal for output to the display 112 and/or to the auxiliary I/O subsystem 150. A subscriber may generate data items, for example e-mail messages, which may be transmitted over the wireless network 101 through the communication subsystem 104, for example.

The motion sensor 180 may comprise an accelerometer (such as a three-axis accelerometer) or other suitable motion sensor. The orientation sensor 182 may comprise an accelerometer (such as a three-axis accelerometer), electronic compass, gyroscope, or a combination thereof. Other suitable orientation sensors could be used instead of, or in addition to, the accelerometer, electronic compass and gyroscope. The motion sensor 180 and orientation sensor 182, or parts thereof, may be combined or shared, for example, within an integrated component. The processor 102, or controller (not shown) of a three-axis accelerometer, can convert acceleration measurements into device orientations.

The electronic device 100 may connect to a host personal computer (not shown) via the serial data port 152 or short-range communication subsystem 162 communicating over a suitable interconnection, such as a USB connection, Firewire^{™} connection, Bluetooth^{™} connection or the like.

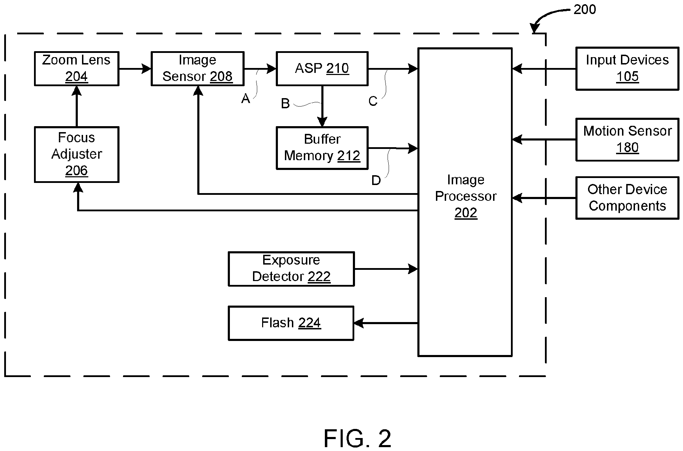

Referring now to Figure 2, the image capture assembly 200 of the electronic device 100 will be described in more detail. The image capture assembly 200 includes an image processor 202 which performs various image processing functions described below. The image processor 202 is typically a programmable image processor but could be, for example, a hard-wired custom integrated circuit (IC) processor, a general purpose microprocessor, or a combination of hard-wired custom IC and programmable processors. When the image capture assembly 200 is part of a multipurpose portable electronic device such as a mobile phone, smartphone or superphone, at least some of the functions of the image capture assembly 200 may be performed by the main processor 102 of the host electronic device 100. It is contemplated that all of the functions performed by the image processor 202 could be performed by the main processor 102, in which case the image processor 202 can be omitted. Furthermore, the image capture assembly 200 has access to various components of the host electronic device 100, and can receive inputs from and send outputs to various components of the host electronic device 100, input such as the input devices 105, motion sensor 180, orientation sensor 182, GPS 184, RAM 108, persistent memory 120 and the like.

The image capture assembly 200 also includes a zoom lens 204 including a mechanical assembly of lens elements which is connected to and controlled by a focus adjuster 206, such as zoom and focus motors (e.g., servo motors), which adjust the focal length and focus distance of the zoom lens 204. The focus adjuster 206 is coupled to the image processor 202 which sends zoom and focus signals to the focus adjuster 206 during zoom and focus operations. The zoom lens 204 has a variable aperture the size of which is expressed by an f-number (sometimes called focal ratio, f-ratio, f-stop, or relative aperture) which is a measure of the diameter of the aperture of the zoom lens 204. The f-number is the focal length divided by the "effective" aperture diameter. The f-number is a dimensionless number that is a quantitative measure of lens "speed".

The zoom lens 204 provides an image to an image sensor 208. The image sensor 208 may have a number of aspect ratios, such as a 4:3 and 16:9 image aspect ratios, and a number of image resolutions. In some embodiments, the image sensor 208 is a charge-coupled device (CCD) sensor; however, a complementary metal-oxide semiconductor (CMOS) sensor or other suitable image sensor could be used. An adjustable aperture and shutter assembly (not shown) in the zoom lens 204 is used to control the aperture size and the exposure time of the image sensor 208. In other embodiments, the zoom lens 204 could be replaced with a fixed focal length lens (also known as a "prime" lens) in which case the focus adjuster 206 merely adjusts the focus distance of the lens. Digital zoom may be provided by digital image processing performed by the image processor 202 of the image capture assembly 200 or processor 102 (rather than optical zoom provided by the zoom lens 204). In other embodiments, the shutter assembly could be omitted in favour of an electronic shutter.

The image processor 202 controls the image sensor 208 by supplying various control signals to the image sensor 208. The image processor 202 also controls the focus adjuster 206, an exposure detector 222 which determines the amount of available light, and a flash 224 for emitting light to illuminate a scene being captured by the focus lens 204. The input devices 105 provide user controls which can control the operation of the image capture assembly 200. The image processor 202 can use the input from the exposure detector 222 to determine the exposure time required to capture an image based on the amount of available light and other settings. The image processor 202 can activate the flash 224 to increase the amount of available light, for example, in response to the input from the exposure detector 222.

An analog captured image signal A output from the image sensor 208 is amplified and converted to a digital captured image signal by an analog signal processor (ASP) 210. The ASP 210 includes an analog-to-digital (A/D) converter among other functional components. A digital captured image signal B output by the ASP 210 is temporarily stored in a buffer memory 212, such as a Dynamic random-access memory (DRAM) buffer memory.

The image processor 202 produces focus signals which drive the focus adjuster 206 (e.g., zoom and focus motors) to adjust the focus of an image captured by the image sensor 208 and output as the captured image signal. The image processor 202 produces focus signals in response to the activation of the capture button. A digital captured image signal C output by the ASP 210 is provided to the image processor 202 which performs autofocus calculations on the digital captured image signal C. Focus signals are sent to the focus adapter 206 to adjust the focus distance of the zoom lens 204 as necessary as a result of the output the autofocus calculations. The autofocus calculations are typically performed using either contrast detection or phase detection methods which rely on moving the zoom lens 204 to make minor adjustments in the focus distance until a maximal (or optimal) contrast is obtained. The autofocus calculations assume that maximal (or optimal) contrast corresponds to maximal sharpness. The nature of the autofocus calculations is outside the scope of the present disclosure and will not be described in further detail herein. Autofocus methods and calculations suitable for use by the image processor 202 are well known in the art and will be readily known to the skilled person.

The digital captured image signal C may also be output to the display 112 to provide a preview image. The digital captured image signal C may be used to provide a real-time or "live" preview in which a real-time image (or an approximation of an image) of the image captured with the image sensor 208 is displayed on the display 112 as a thumbnail image (e.g., reduced size/resolution version) of the captured image for graphical processing efficiency, or alternatively a dedicated electronic viewfinder device.

A digital captured image signal D provided by the buffer memory 212 is subsequently processed by the image processor 202 to produce a processed digital image file, which may contain a still digital image or a video image.

The image processor 202 may perform various other image processing functions, including colour interpolation and colour and tone correction to produce rendered image data, such as standard Red Green Blue (sRGB) image data. The rendered image data is then stored in the memory of the removeable memory card 132 or persistent memory 120. In some embodiments, the rendered image data may be compressed before storing, for example, the rendered image data may be JPEG compressed and stored as a JPEG image file, which may be in the Exchangeable image file (Exif) format or other suitable format which preferably supports image metadata, such as one or more of a date/time the image was captured, f-number of the zoom lens 204 at which the image was captured, GPS location and pointing direction when the image was captured and possibly other camera settings.

The processing performed by the image processor 202 is typically controlled by firmware stored in a firmware memory (not shown), which may be flash memory or any other suitable form of memory. The image processor 202 processes the digital input image from the buffer memory 212, using RAM memory (such as RAM 108 of the host electronic device or possibly separate, dedicated RAM) to store intermediate results during processing.

While the components of the electronic device 100 are shown as separate blocks in Figures 1 and 2, the functions of various components may be combined in actual processing elements, circuits and the like. Furthermore, some of the functional blocks of Figures 1 and 2 may be separated into one or more sub blocks when implemented in actual processing elements, circuits and the like.

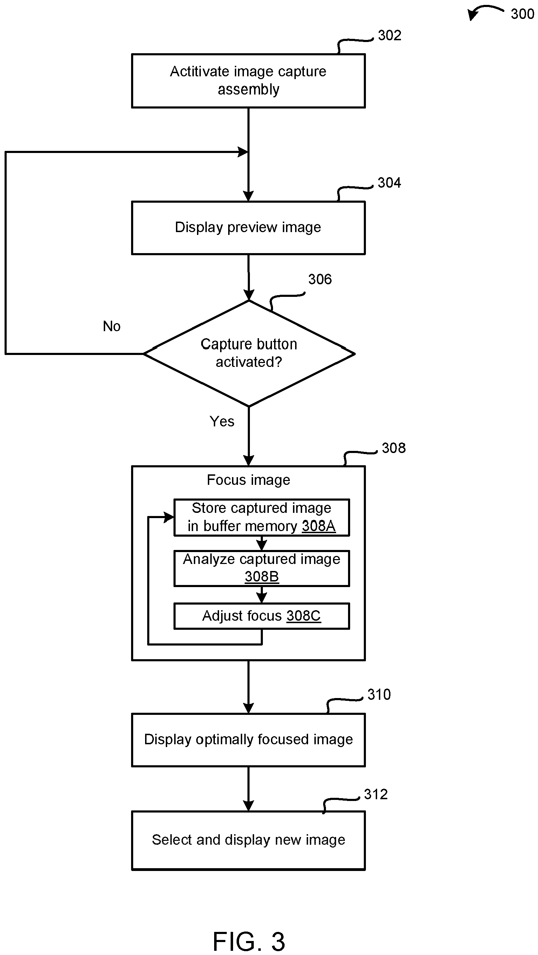

Figure 3 is a flowchart of a method 300 for focus selection in accordance with one example embodiment of the present disclosure. The method 300 may be carried out, at least in part, by firmware or software such as the camera application 181, executed by the processor 102 and/or image processor 202. Coding of software for carrying out such a method 300 is within the scope of a person of ordinary skill in the art provided the present disclosure. The method 300 may contain additional or fewer processes than shown and/or described, and may be performed in a different order. Computer-readable code executable by at least one processor 102 and/or image processor 202 to perform the method 300 may be stored in a computer-readable medium such as the persistent memory 120.

At 302, the image capture assembly 200 is activated, for example, by engaging a camera mode of the electronic device 100. The camera mode can be activated by a camera button or a corresponding menu option displayed on the display 112. The zoom lens 204 is set to a default position which is typically a wide angle position.

At 304, the image sensor 208 captures images which are output to the display 112 to provide an image preview mode which enables the user to compose the images to be captured based on a real-time preview image. The digital captured image signal C provides captured images for preview on the display 112. As part of the composing, the user may activate zoom buttons to set a desired field of view. Alternatively, a dedicated electronic viewfinder device may be provided for the display of the real-time preview image.

At 306, the electronic device 100 monitors for and detects when the capture button is activated.

At 308, when the electronic device 100 detects that the capture button is activated, focusing of the captured image is performed. The digital captured image signal C provides captured images for the image processor 202 to perform autofocus calculations as well as providing captured images for preview on the display 112, as mentioned previously.

As part of the focusing, the image processor 202 stores an initial captured image in the buffer memory 212 (308A). The initial captured image is an image captured by the image sensor 208 when the electronic device 100 detects that the capture button is activated. The image processor 202 then analyses the digital captured image signal C using autofocus calculations (e.g., contrast maximization) (308B) and produces focus signals based on the analysis (e.g., the result of the autofocus calculations) which drive the focus adjuster 206 to move the zoom lens 204 to adjust the focus of the image (308C). The focus is adjusted by moving the zoom lens 204 from an initial position to an adjusted position to adjust the focus distance of the zoom lens 204. The image processor 202 stores the newly captured image in the buffer memory 212 (308A) and analyses the new digital captured image signal C. The newly captured image is an image captured by the image sensor 208 when the zoom lens 204 is in the adjusted position (308B). The image processor 202 produces additional focus signals which drive the focus adjuster 206 to move the zoom lens 204 to further adjust the focus of the image when the maximal contrast (or other optimal contrast) or other threshold has not been reached (308C). The process of storing a captured image in the buffer memory 212, analysing the captured image and adjusting the position of the zoom lens 204 (308A-308C) is iteratively repeated until the maximal contrast (or other optimal contrast) or other threshold is reached. The process is performed during one autofocus cycle.

During the focusing, the autofocus images at each lens position are stored in the buffer memory 212 at 308A. Typically, a sequence of autofocus images is stored in a chronological order in the buffer memory 212. The images are typically stored in association with a date and/or time at which the images were captured to assist subsequent retrieval and/or processing, e.g. for accessing and retrieval of images based on the chronological order of the time at which the images were captured. The focusing typically takes approximately 1 second or less to complete. The number of autofocus images stored during this time depends on the speed of the autofocus system, which is typically dependent on the image sensor 208, focus adjuster 206, image processor 202 and buffer memory 212. The number of autofocus images is expected to be between 2 and 20, more typically between 5 and 15 but may vary depending on the particular hardware and imaging settings which are used.

Each of the stored autofocus images has a different focus distance in accordance with the position of the zoom lens 204 when the image was captured. For example, in one autofocus image a foreground of a scene may be in focus (i.e., sharp) while a background of the scene is not in focus (i.e., blurry), in another autofocus image the background of the scene may be in focus while the foreground of the scene is not in focus, and in yet another autofocus image a subject (e.g., person or object of interest) of the scene may be in focus while the background and foreground of the scene are not in focus.

When the focusing is complete, the autofocus images may be stored in a common, composite file rather than as individual autofocus image files. The composite file may include metadata about each of the autofocus images, such as one or more of a date/time the image was captured, f-number of the zoom lens 204 at which the image was captured, GPS location and pointing direction when the image was captured and possibly other camera settings. The composite file may be a common file format or a proprietary file format. The individual autofocus image files, or the composite file, may be stored in persistent memory such as the memory 120 or the removeable memory card 132 when the focusing is complete. When the focusing is in progress, the autofocus images are stored typically in the buffer memory 212 as mentioned previously.

At 310, when focusing is complete, an optimally focused image is displayed on the display 112 of the electronic device as a post-capture preview image. Typically, the post-capture preview image is displayed as a thumbnail image (e.g., reduced size/resolution version) of the optimally focused image for graphical processing efficiency.

At 312, a new autofocus image is selected in response to input. The autofocus image is selected either from individual autofocus image files or the composite file, depending on the embodiment. As mentioned previously, the autofocus images may be stored in the buffer memory 212 or persistent memory, depending on the embodiment. The electronic device 100 may display a post-capture focus selection user interface which facilities input from the user to select and display alternative autofocus images. The post-capture focus selection user interface can be activated by a corresponding button or menu option displayed on the display 112. A previous or next autofocus image in the sequence of autofocus images may be selected as the new autofocus image in accordance with corresponding input. The previous or next autofocus image in the sequence of autofocus images is the closest image in sequence (e.g., closest in the chronological order) either before or after the currently displayed autofocus image. In one example embodiment, a left input (such as a left swipe on a touch-sensitive display or activation of a left navigational button - which may be a physical button or an onscreen button displayed on a touch-sensitive display) may select a previous autofocus image in the sequence whereas a right input may select a next autofocus image in the sequence (such as a right swipe on a touch-sensitive display or activation of a right navigational button - which may be a physical button or an onscreen button displayed on a touch-sensitive display).

As mentioned previously, each of the stored autofocus images captured by the method 300 has a different focus distance. Accordingly, the method 300 allows a user to a select a focus of a scene after the image has been captured. Conventionally, when an image is captured the focus distance is fixed so that only a part of the image within a depth of the field of the zoom lens 204 is in focus (i.e., sharp) while other parts of the image outside the depth of field are not in focus (i.e., blurry). The parts of the image which are in focus and the parts of the image which are not in focus are fixed and cannot be changed. While some digital cameras provide so-called continuous capture or burst modes, these modes are merely a series of autofocused images taken in rapid succession. Accordingly, each image captured in the series of autofocused images is the optimally focused image which results from the completion of a normal autofocus cycle. Thus, while these modes allow rapid image capture, these modes lack the ability to select or choose a focus of the captured images. Thus, users cannot select a desired focus distance and are instead limited to the optimal focus distance determined by the autofocus system (e.g., image processor 202). Accordingly, an aspect of the present disclosure is the recognition that existing autofocus methods restrict a user's ability to set the focus distance which sometimes results in the selecting of a focus distance which is different from a desired focus distance. The present disclosure describes a post-capture focusing selection method which seeks to address this and optionally other shortcomings.

The method 300 presents a solution which allows the focus distance to be selected post-capture by modifying the passive autofocus method to store images taken during focus searching rather than discarding the autofocus images after the optimal focus distance is determined by the autofocus system and the optimally focused image is created. The present solution does not require any additional hardware and requires little or no changes to existing hardware found in conventional digital cameras.

If desired, the autofocus method used by the image processor 202 could be configured to use an increased interval of focus positions of the zoom lens 204 compared with conventional autofocus methods. For example, the interval of movement of the zoom lens 204 during autofocus searching may be increased to provide a large number of autofocus images, each with a smaller change in focus distance. This is expected to result in smaller changes in the focus distance between the autofocus images captured during autofocus searching, thereby permitting more subtle control over the focus distance. It is conceivable that the range of the focus positions for a given zoom lens 204 (or prime lens) may be increased to increase the range of the focus distances in the autofocus images capture during autofocus searching.

The steps and/or operations in the flowcharts and drawings described herein are for purposes of example only. There may be many variations to these steps and/or operations without departing from the teachings of the present disclosure. For instance, the steps may be performed in a differing order, or steps may be added, deleted, or modified.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description.

## Claims

1. A method for composing an image on a portable electronic device, the method comprising:
focusing light received by an image sensor, the focusing including moving a lens between a number of focus positions;
capturing an image using the image sensor at a plurality of the number of the focus positions, the captured images having different focus distances;
storing the captured images;
determining which of the captured images is an optimally focused image; and
displaying the optimally focused image as a currently displayed image on a display of the portable electronic device.

2. The method of claim 1, further comprising:
displaying a new image on the display, wherein the new image is selected from the captured images in response to input.

3. The method of claim 2, wherein the new image is a previous image or a next image relative to the currently displayed image in a chronological order.

4. The method of claim 2 or claim 3, wherein the new image has a different focus distance than the currently displayed image.

5. The method of any one of claims 1 to 4, wherein the focusing, capturing, and storing occur within one autofocus cycle.

6. The method of claim 5, wherein the autofocus cycle is initiated in response to activation of a capture button.

7. The method of claim 5 or claim 6, wherein the captured images are stored in a buffer during the autofocus cycle.

8. The method of claim 7, further comprising:
storing the captured images in persistent memory after completion of the autofocus cycle.

9. The method of any one of claims 1 to 8, further comprising:
creating a composite file based on the captured images.

10. The method of any one of claims 1 to 9, wherein the composite file is stored in persistent memory after completion of an autofocus cycle in which the focusing, capturing, and storing occur.

11. The method of any one of claims 1 to 10, wherein each of the captured images has a different focus distance.

12. An electronic device, comprising:
a processor;
a lens coupled to a motor which is controlled by the processor;
a display and an image sensor both coupled to the processor;
wherein the processor is configured to perform the method of any one of claims 1 to 11.

13. A computer program product comprising a computer readable medium having stored thereon computer program instructions for implementing a method for composing an image on a portable electronic device, the computer executable instructions comprising:
computer executable instructions for focusing light received by an image sensor, the focusing including moving a lens between an initial focus position having a first focus distance and an adjusted focus position having a second focus distance;
computer executable instructions for capturing an image using the image sensor at each of the initial focus position and an adjusted focus position;
computer executable instructions for displaying one of the images captured at the initial focus position and the adjusted focus position which is determined to be an optimally focused image;
computer executable instructions for storing the image captured at the initial focus position and the image captured at the adjusted focus position in persistent memory.

14. The computer program product of claim 13, wherein the focusing, capturing, and storing occur within one autofocus cycle.

15. The computer program product of claim 13 or claim 14, further comprising:
computer executable instructions for displaying a new image on the display, wherein the new image is selected from the captured images in response to input.
computer executable instructions for displaying the other of the images captured at the initial focus position and the adjusted focus position which is not determined to be an optimally focused image.
